Europäisches Patentamt

(19) European Patent Office

Office européen des brevets

(11) Publication number: **0 251 362 B1**

# EUROPEAN PATENT SPECIFICATION

(45) Date of publication of patent specification: **03.04.91**　(51) Int. Cl.⁵: **A61C 13/235**

(21) Application number: **87200939.4**

(22) Date of filing: **19.05.87**

(54) A magnetic fastening system for a dental prosthesis.

(30) Priority: **20.05.86 NL 8601267**

(43) Date of publication of application:
**07.01.88 Bulletin 88/01**

(45) Publication of the grant of the patent:
**03.04.91 Bulletin 91/14**

(84) Designated Contracting States:
**AT BE CH DE ES FR GB GR IT LI LU NL SE**

(56) References cited:
**FR-A- 2 076 270**
**FR-A- 2 390 151**
**US-A- 4 247 286**
**US-A- 4 302 189**

(73) Proprietor: **I.D.R. B.V.**
**Boerhaaveplein 9**
**NL-4624 VT Bergen op Zoom(NL)**

(72) Inventor: **Waeber, René**
**Bethlehem**
**CH-3185 Schmitten(CH)**

(74) Representative: **Smulders, Theodorus A.H.J.,**
**Ir. et al**
**Vereenigde Octrooibureaux Nieuwe Parklaan**
**107**
**NL-2587 BP 's-Gravenhage(NL)**

## Description

This invention relates to a system for fastening a dental prosthesis comprising a support element to be fitted in the mouth and a fastening element to be fitted on the prosthesis, with the support element being designed to detachably retain said fastening element, the support element comprising a bottom portion and a top portion with at least the top portion being made, at least in part, of magnetic material, and including attaching means for attaching it to at least one dental element, the fastening element comprising a cover plate of magnetically receptive material capable of at least partially embracing said support element.

Such a system is known from FR-A-2076270. In a first embodiment according to this publication, a root cap with a frustoconical support element of a magnetic material is fitted in the jaw as a support element, and the prosthesis is provided with a cap-shaped support element of magnetic or magnetizable material cooperating therewith. The disadvantage of that system is that it is expensive.

In a second embodiment according to this publication the top portion of the support element is a magnetic U-shaped longitudinal bar, which extends between an existing dental element at one side, to which it is attached by means of an element which at the same time forms the bottom portion of the support element as well as the attaching means, and a pin mounted in a dental root at the other side. The fastening element according to this second embodiment being also a longitudinal rectangular bar of magnetizable material, which fits into the U-shaped bar and which carries the prosthesis. Also the system according to this second embodiment is expensive and also can not easily be cleaned, especially because of the U-shaped form of the magnetic bar.

There is also already a fastening system for dental prostheses which is known by the name of extracoronary fastening system. In it, dental prostheses can be detachably fastened to support elements which, in their turn, can be fitted on, or in, dental elements still present in the upper or lower jaw. The detachable attachment of the prosthesis in the mouth is accomplished, in that system, by means of a press button construction, in which the support element carries one part of the press button and the fastening element carries the other part of the press button. Similar screw and slide constructions are also known.

The disadvantage of this manner of retention is not only that a great many different components are required, but in particular that the press button part permanently fitted in the mouth, which commonly is an annular element which is open at the top and bottom, is prone to contamination and is not easily cleaned. Moreover, the gums tend to grow into the annular space, which makes cleaning still more difficult and in addition may give rise to irritation.

It is an object of the present invention to provide a system which does not have the disadvantages outlined above. For this purpose the invention provides a system of the above kind wherein the support element has an essentially oval contour in side view.

The advantage of the system according to the invention is that it is simple of construction, comprises few separate components, and in particular that it is very easy to clean by virtue of the complete absence of apertures, slots and the like in the support element permanently present in the mouth.

The oval shape of the support element and the adapted shape of the cover plate offer the possibility for these elements to move relatively to each other, so that the prosthesis may hinge relatively to the existing dental elements and, for example, during chewing, no undue forces are exerted on the prosthesis. On the other hand, it is possible for the prosthesis to be rigidly attached to the crowns fitted on existing dental elements, which may be desirable, for example, when a prosthesis is attached between two crowns. For such a rigid attachment, the cover plate and the support element may be complementary in shape so as to exclude relative movement.

In order to make for some resilience in a direction perpendicular to the jaw, which makes chewing more comfortable, a layer of resilient material suitable for dental purposes may be provided between the cap-shaped cover plate and the support element or between the cover plate and the actual prosthesis.

Some embodiments of the invention will now be described, by way of example, with reference to the accompanying drawings, in which:

Fig. 1a shows a side-elevational view of the system according to the invention;

Figs. 1b, c, d show different contours in top plan view of the support element of the system shown in Fig. 1; and

Fig. 2 shows a side-elevational view of a second embodiment according to the invention.

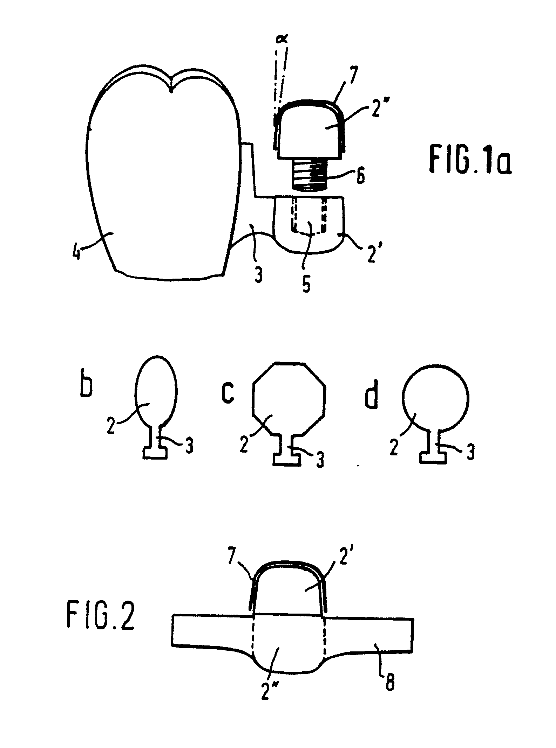

Fig. 1 shows a side-elevational view of the system according to the present invention with a support element 2 which in the embodiment shown consists of a bottom portion 2' and a top portion 2". The bottom portion 2' is secured by means of a support 3 to a dental element or to a crown 4 fitted on a dental element still present in the mouth. The bottom portion 2' and support 3 consist, for example, of metal, with the portions 2' and 3 being possibly cast with the crown 4 or possibly secured to it later by soldering or in any other known

manner. Portions 2' and 3 may alternatively consist of synthetic plastics and be secured to the crown in known manner.

Formed in the bottom portion 2' of support element 2 is a threaded hole 5. In the case of a metal bottom portion 2', the screw thread is formed in the metal itself, while in a plastics bottom portion 2' a metallic threaded bushing is mounted in the plastics.

The top portion 2" of the support element 2 consists at least in part of a magnetic material and is provided with a threaded projection 6 which can be screwed in a hole 5. Various suitable magnetic materials are known in the art of dentistry for the material of the upper portion 2". If desired, the magnetic material may be provided with a coating to prevent corrosion.

Instead of a support element composed of two loose elements 2' and 2", this may, if desired, be formed as one whole, in which case the threaded projection 6 and hole 5 can be done without.

When, in the embodiment shown, the top portion 2" has been screwed to the bottom portion 2', the support element has an oval shape in sideview, in any case with no flat surface at the bottom side. The angle $\alpha$ between the longitudinal axis of support element 2 and the side face thereof may, for example, be about $6°$. The essentially oval shape of the support element has the advantage that it can be very easily cleaned and that, specifically, the space under the underside of the bottom portion 2' can easily be cleaned owing to the absence of a flat face, while no debris can collect as a result of capillary action between this underside and the juxtaposed gums, which risk does exist if the underside of the bottom portion 2' were flat.

Figs. 1b, c and d show a number of different top plan views of the support element 2, namely, a round shape, a heptagonal shape and an oval shape. However, various other shapes are possible.

The fastening element to be placed on the support element 2 comprises a cap-shaped cover plate 7. In the figure, this cover plate 7 is shown only, because the prosthesis itself and the manner in which the cover plate is secured to the prosthesis are immaterial for a good understanding of the invention and, in addition, will be clear to those skilled in the art.

Cover plate 7 is made of magnetically receptive material, for example, a ferromagnetic material, so that the prosthesis can be retained by means of the cover plate to the support element by magnetic force. The cover plate preferably embraces the entire support element portion 2" to profit optimally from the magnetic force. Cover plate 7 has such a shape that it closely fits on the support element to ensure optimum attraction by the magnet, for example, in plan view, a shape complementary to that of support element 2, i.e. for example, a round, heptagonal or oval shape with a support element shaped as shown in the respective Figs. 1b, 1c and 1d.

In the case of a round or oval support element with a complementarily shaped cover plate, the cover plate, and hence, the prosthesis, may tilt somewhat relatively to the support element. In the case of a heptagonal or otherwise angled support element, such a movement is hardly, if at all, possible. This may be desirable if the prosthesis is carried on opposite sides by support elements, such as element 2, secured to crowns.

Fig. 2 shows the system according to the invention as a part of a different type of extracoronary fastening element. The support element 2 forms part of a rod 8 secured on opposite ends, for example by means of soldering, to crowns fitted on dental elements still present in the mouth.

It will be clear that many variants are possible within the scope of the present invention, depending on the use of the various known dental materials and the specific type of prosthesis to be fastened. Thus, the support element 2 may alternatively be carried by means of arm 3 by a plurality of crowns located in one row, while arm 3 may be absent, in which case the portion 2' of the support element forms part of the crown proper.

## Claims

1. A system for fastening a dental prosthesis comprising a support element (2) to be fitted in the mouth on a dental element (4) and a fastening element to be fitted on the prosthesis with the support element being designed to detachably retain said fastening element, the support element (2) comprising a bottom portion (2') and a top portion (2") with at least the top portion being made, at least in part, of magnetic material, and including attaching means (3) on the bottom portion for attaching it to at least the dental element (4), the fastening element comprising a cover plate (7) of magnetically receptive material capable of at least partially embracing the portion said support element comprising magnet material, characterized in that the suport element (2) has an essentially oval contour in side view.

2. A system as claimed in claim 1, characterized in that said (2") top portion is detachably connected to said bottom portion (2').

3. A system as claimed in claim 2, characterized in that the connection between the top and bottom portions is a screw connection (5,6).

4. A system as claimed in claim 1, 2 or 3, characterized in that the attaching means comprise a support arm (3) on one side of the support element.

5. A system as claimed in claim 1, 2 or 3, characterized in that the attaching means comprise support rods (8) on opposite sides of the support element.

6. A system as claimed in any of the preceding claims 1-5, characterized in that the non-magnetic part of the support element (2) is made of metal.

7. A system as claimed in any of the preceding claims 1-5, characterized in that the non-magnetic part of the support element (2) is made of synthetic plastics material.

8. A system as claimed in any of the preceding claims 1-7, characterized in that, in top plan view, the support element (8) has an essentially round circumferential configuration. (fig. 1d)

9. A system as claimed in any of the preceding claims 1-7, characterized in that, in top plan view, the support element (2) has an essentially oval configuration. (fig. 1b)

10. A system as claimed in any of the preceding claims 1-7, characterized in that, in top plan view, the support element (2) has an essentially polygonal configuration. (fig. 1c)

11. A system as claimed in any of the preceding claims, characterized in that the cover plate (7) is covered on one side with a layer of resilient material.

**Revendications**

1. Système pour la fixation d'une prothèse dentaire, comprenant un élément porteur (2) à ajuster dans la bouche sur un élément dentaire (4) et un élément de fixation à ajuster à la prothèse, avec l'élément porteur conçu pour tenir de manière détachable l'élément de fixation, l'élément porteur (2) comprenant une partie inférieure (2') et une partie supérieure (2") avec la partie supérieure au moins faite, au moins partiellement, en matière magnétique, et comprenant un moyen (3) d'attachement sur la partie inférieure pour l'attacher à l'élément dentaire (4) au moins, l'élément de fixation comprenant une plaque de couverture (7) en matière magnétiquement réceptive capable d'embrasser au moins partiellement la partie de l'élément porteur comprenant la matière aimantée, caractérisé en ce que l'élément porteur (2) a un contour essentiellement ovale en vue de côté.

2. Système de la revendication 1 caractérisé en ce que la partie supérieure (2") est réunie de manière détachable à la partie inférieure (2').

3. Système de la revendication 2 caractérisé en ce que la réunion des parties supérieure et inférieure est une réunion par filetages (5, 6).

4. Système des revendications 1, 2 ou 3 caractérisé en ce que le moyen d'attachement comprend un bras porteur (3) situé sur un côté de l'élément porteur.

5. Système des revendications 1, 2 ou 3 caractérisé en ce que le moyen d'attachement comprend des tiges porteuses (8) situées sur des côtés opposés de l'élément porteur.

6. Système selon l'une quelconque des revendications précédentes 1 à 5, caractérisé en ce que la partie non magnétique de l'élément porteur (2) est faite en métal.

7. Système selon l'une quelconque des revendications précédentes 1 à 5 caractérisé en ce que la partie non magnétique de l'élément porteur (2) est faite en matière plastique synthétique.

8. Système selon l'une quelconque des revendications précédentes 1 à 7, caractérisé en ce que, en vue de dessus, l'élément porteur (2) a une configuration circonférentielle essentiellement ronde (figure 1d).

9. Système selon l'une quelconque des revendications précédentes 1 à 7 caractérisé en ce que, en vue de dessus, l'élément porteur (2) a une configuration essentiellement ovale (figure 1b).

10. Système selon l'une quelconque des revendications précédentes 1 à 7, caractérisé en ce que, en vue de dessus, l'élément porteur (2) a une configuration essentiellement polygonale (figure 1c).

11. Système selon l'une quelconque des revendications précédentes caractérisé en ce que la plaque de couverture (7) est revêtue sur un côté d'une couche de matière élastique.

**Ansprüche**

1. System zum Befestigen einer Zahnprothese, das eine im Mund an einem Zahnbestandteil (4) anzubringende Halterung (2) und ein an der Prothese anzubringendes Verbindungselement aufweist, wobei die Halterung zum lösbaren Halten des Verbindungselements ausgebildet ist, wobei die Halterung (2) ein unteres Teil (2') und ein oberes Teil (2"), wobei zumindest das obere Teil mindestens teilweise aus magnetischem Werkstoff hergestellt ist, und Befestigungsmittel (3) am unteren Teil zu seiner Befestigung an zumindest dem Zahnbestandteil (4) aufweist, wobei die Halterung eine Deckplatte (7) aus magnetisch anziehbarem Werkstoff aufweist, die imstande ist, zumindest teilweise den Teil der Halterung zu umgreifen, der magnetischen Werkstoff aufweist, dadurch gekennzeichnet, daß die Halterung (2) im wesentlichen einen ovalen Umriß in Seitenansicht hat.

2. System nach Anspruch 1, dadurch gekennzeichnet, daß das obere Teil (2") mit dem unteren Teil (2') lösbar verbunden ist.

3. System nach Anspruch 2, dadurch gekennzeichnet, daß die Verbindung zwischen dem oberen und unteren Teil eine Schraubverbindung (5, 6) ist.

4. System nach Anspruch 1, 2 oder 3, dadurch gekennzeichnet, daß das Befestigungsmittel einen Kalter (3) auf einer Seite der Halterung aufweist.

5. System nach Anspruch 1, 2 oder 3, dadurch gekennzeichnet, daß das Befestigungsmittel Haltestäbe (8) an gegenüberliegenden Seiten der Halterung aufweist.

6. System nach einem der Ansprüche 1 - 5, dadurch gekennzeichnet, daß der nicht-magnetische Teil der Halterung (2) aus Metall hergestellt ist.

7. System nach einem der Ansprüche 1 - 5, dadurch gekennzeichnet, daß der nicht-magnetische Teil der Halterung (2) aus synthetischer Plastikmasse hergestellt ist.

8. System nach einem der Ansprüche 1 - 7, dadurch gekennzeichnet, daß in Draufsicht die Halterung (2) eine im wesentlichen runde Umfangsgestaltung hat (Fig. 1d).

9. System nach einem der Ansprüche 1 - 7, dadurch gekennzeichnet, daß in Draufsicht die Halterung (2) eine im wesentlichen ovale Gestaltung hat (Fig. 1b).

10. System nach einem der Ansprüche 1 - 7, dadurch gekennzeichnet, daß in Draufsicht die Halterung (2) eine im wesentlichen polygonale Gestaltung hat (Fig. 1c).

11. System nach einem der vorhergehenden Ansprüche, dadurch gekennzeichnet, daß die Deckplatte (7) auf einer Seite mit einer Schicht eines elastischen Werkstoffes überzogen ist.

FIG.1a

FIG.2